# EUROPÄISCHE PATENTSCHRIFT

(11) **EP 3 106 706 B1**
(45) Veröffentlichungstag und Bekanntmachung des Hinweises auf die Patenterteilung: **15.08.2018**
(21) Anmeldenummer: 16173396.9
(22) Anmeldetag: 07.06.2016
(51) Int. Cl.: F16F 1/40

(54) **KRAFTFAHRZEUGACHSE MIT EINER GUMMI-FESTSTOFFLAGER**
A MOTOR VEHICLE AXLE WITH A SOLID RUBBER BEARING
UN AXE DE VEHICULE AUTOMOBILE AVEC UN PALIER RIGIDE EN CAOUTCHOUC

(30) Priorität: 15.06.2015 DE 102015109533
(43) Veröffentlichungstag der Anmeldung: 21.12.2016
(73) Patentinhaber: Benteler Automobiltechnik GmbH, 33102 Paderborn (DE)
(72) Erfinder: Schultz, Erik, 33100 Paderborn (DE); Koczar, Peter, 33106 Paderborn (DE)
(74) Vertreter: Griepenstroh, Jörg

(56) Entgegenhaltungen:
- EP-A1- 0 520 187
- EP-A1- 1 887 248
- EP-A1- 2 497 660
- WO-A1-2010/034807
- DE-A1- 4 141 463
- DE-A1-102013 200 524
- FR-A- 1 291 303
- US-A- 2 477 972

## Beschreibung

Die vorliegende Erfindung betrifft eine Kraftfahrzeugachse mit Gummi-Feststofflager gemäß den Merkmalen im Oberbegriff von Patentanspruch 1.

Aus dem Stand der Technik ist es bekannt, dass Kraftfahrzeugachsen bzw. Radaufhängungen derart kinematisch mit dem Kraftfahrzeug gekoppelt sind, dass bei einem Einfederungsvorgang, einer Kurvenfahrt oder aber auch einem eingeleiteten Bremsvorgang sich die Spur- und Sturzstellung des Rades gezielt ändert, um die Fahreigenschaften positiv zu beeinflussen. So ist es besonders bevorzugt erwünscht, dass bei Kurvenfahrt die kurvenäußeren Räder, insbesondere das kurvenäußere Rad der Hinterachse in negativen Sturz und/oder Vorspur dreht, um die Seitenführungskraft zu erhöhen und damit ein Übersteuern des Kraftfahrzeuges zu vermeiden.

Aus dem Stand der Technik ist beispielsweise durch die EP 2 497 660 A1 eine Kraftfahrzeugachse bekannt, deren Radaufhängung elastokinematisch mit der Längsschwinge einer Verbundlenkerachse gekoppelt ist, so dass die oben genannten Effekte eintreten.

Damit eine derartig elastokinematische Kopplung vorgenommen werden kann, sind in oben genannter Druckschrift Mehrscheibenlager aufweisend eine Metallscheiben- und Gummiringanordnung bekannt.

Aus der DE 41 41 463 A1 ist ein Gummimetallscheibenlager bekannt, bei dem eine äußere Scheibe einen nach außen stehenden Kragen aufweist.

Ferner ist aus der EP 0 520 187 A1, die als nächstliegender Stand der Technik angesehen wird, ein parallel und axial belastbares Drehgleitlager für Fahrwerksteile in Kraftfahrzeugen bekannt. Das Axiallager besteht dabei aus einer Gleitscheibe und einem Klemmring, die beide durch einen Stützring aus einem elastomeren Werkstoff fest anhaftend miteinander verbunden sind. Aus der EP 0 520 187 A1 oder der DE 10 2013 200 524 A1 ist jeweils ein Gummi-Metall-Lager bekannt, bei welchem zwei Scheiben parallel beabstandet angeordnet sind und eine Gummischicht dazwischen angeordnet ist. Eine außen angeordnete Scheibe weist einen nach außen abstehenden Kragen auf.

Aufgabe der vorliegenden Erfindung ist es, ein elastokinematisches Lager aufzuzeigen, dessen Dauerhaltbarkeit verbessert ist, welches es ermöglicht, gezielt gewünschte elastokinematische Eigenschaften in Bezug auf radiale und axiale Steifigkeit zu erfüllen und gleichzeitig einen einfachen Montagevorgang ermöglicht.

Die zuvor genannte Aufgabe wird erfindungsgemäß mit einer Kraftfahrzeugachse mit Gummi-Feststofflager gemäß den Merkmalen im Patentanspruch 1 gelöst. Vorteilhafte Ausgestaltungsvarianten der vorliegenden Erfindung sind Gegenstand der abhängigen Patentansprüche.

Das erfindungsgemäße Gummi-Feststofflager zur Anordnung an einer Kraftfahrzeugachse, insbesondere an einer Verbundlenkerachse, ist scheibenartig aus mindestens zwei Scheiben aus Feststoff mit dazwischen angeordneter Gummischicht aufgebaut. Es zeichnet sich erfindungsgemäß dadurch aus, dass eine auf die Axialrichtung des Gummi-Feststofflagers bezogen außen angeordnete Scheibe einen nach außen stehend orientierten Kragen aufweist.

Der nach außen stehend orientierte Kragen ist insbesondere ausgestanzt bzw. ausgebördelt oder umgebördelt aus der äußeren Scheibe. Insbesondere weist der Kragen einen 90° Winkel zur Scheibenebene der Feststoffscheibe auf.

Der Kragen bietet erfindungsgemäß die Möglichkeit, dass beim Montagevorgang eine Zentrierung des Gummi-Feststofflagers in einer Montageöffnung ermöglicht wird. Insbesondere ist eine Radaufhängung bzw. ein Radträger mittels des Gummi-Feststofflagers an die Achse, insbesondere an die Längsschwinge der Achse, gekoppelt. Der Kragen ermöglicht somit eine formschlüssige Zentrierung, wobei der Kragen insbesondere von einem Schraubbolzen durchgriffen ist. Aufgrund der Zentrierung ist es zum einen möglich, den Montagevorgang insbesondere bei der Erstmontage zu erleichtern. Ein fehlerhafter Sitz bei der Montage wird vermieden, so dass sichergestellt ist, dass die Achsanordnung mit dem erfindungsgemäßen Gummi-Feststofflager in korrekter Lage montiert ist und somit die Lebensdauer der gesamten Achsanordnung deutlich erhöht wird. Durch den mehrscheibigen Aufbau mit dazwischen angeordneter Gummilage, insbesondere mit dazwischen angeordneter Gummischicht, ist es möglich, das Lager anforderungsspezifisch auszulegen beispielsweise durch Dimensionierung von Gummi- und Feststoffanteilen sowie weiterhin besonders bevorzugt Eigenschaften der Gummilagen.

Das Gummi-Feststofflager, nachfolgend auch als Lager bezeichnet, ist derart aufgebaut, dass drei Scheiben parallel zueinander beabstandet angeordnet sind, wobei zwischen den Scheiben jeweils eine Gummischicht angeordnet ist. Mithin sind drei Scheiben zueinander beanstandet angeordnet und dazwischen zwei Gummischichten. Das geometrische Verhältnis ist insbesondere derart ausgebildet, dass die Gummischichten in Axialrichtung eine Breite aufweisen, die größer ist als die Breite der Scheiben.

In bevorzugter Ausführungsvariante können die Abstände aller drei Schreiben zueinander gleich sein, wodurch auch die Breite der beiden Gummischichten gleich ist. Im Rahmen der Erfindung ist jedoch auch vorstellbar, dass die Abstände zwischen je zwei Scheiben voneinander verschieden sind. Somit ist eine Gummischicht in ihrer Breite kleiner als die andere Gummischicht. Dies ermöglicht es, wiederum gezielt beispielsweise einen progressiven oder degressiven Steifigkeitsverlauf des Lagers in Axialrichtung zu realisieren.

Beide in Axialrichtung außen liegenden Scheiben weisen jeweils einen Kragen auf, welcher nach außen zeigend orientiert ist. Die beiden Kragen sind somit in entgegengesetzte Richtungen orientiert.

Als Feststoff wird insbesondere ein metallischer Werkstoff, ganz besonders bevorzugt ein Stahlwerkstoff eingesetzt. Der Feststoff kann jedoch auch ein Kunststoffwerkstoff sein. Im Rahmen der Erfindung ist es auch vorstellbar, dass nicht nur eine Scheibe aus Kunststoff ausgebildet ist, sondern dass von den bevorzugt drei Scheiben eine Scheibe aus einem verschiedenen Werkstoff ausgebildet ist. Beispielsweise können die beiden äußeren Scheiben aus einem metallischen Werkstoff ausgebildet sein und die mittlere Scheibe aus einem Kunststoff. Im Rahmen der Erfindung ist es auch vorstellbar, dass die beiden äußeren Scheiben aus einem Kunststoff ausgebildet sind und die mittlere Scheibe aus einem metallischen Werkstoff.

Die Scheiben sind insbesondere mit der jeweiligen Gummischicht verklebt. Im Rahmen der Erfindung ist es jedoch auch vorstellbar, dass die Gummischicht auf die Scheibe aufvulkanisiert ist. Eine weitere Fertigungsmöglichkeit zur Herstellung des Gummi-Feststofflagers besteht darin, dass die Scheiben in die Gummischichten eingegossen sind.

Um eine Verschmutzung, Korrosion oder ein vorzeitiges Ablösen zu vermeiden, ist weiterhin vorgesehen, dass die Scheiben außenseitig insbesondere vollständig von einem Gummimantel eingeschlossen sind. Dieser Gummimantel verhindert das Eindringen von Schmutz sowie Feuchtigkeit insbesondere zwischen die Gummischicht und die Scheiben, so dass gerade bei Scheiben aus metallischem Werkstoff eine Korrosion vermieden ist. Ferner können keine Schmutzpartikel zwischen Gummischicht und Scheibe gelangen, so dass bei Wechselbeanspruchungen entsprechend durch eindringende Schmutzpartikel ein abrasiver Effekt zum Ablösen zwischen Gummischicht und Scheibe vermieden wird.

Darüber hinaus kann der Gummimantel gerade in Axialrichtung eine Spannkraft ausüben, so dass die Anordnung von Scheiben und Gummischicht in Axialrichtung sich in einem gewissen Maß nicht auseinander bewegen kann, weshalb ein Ablösen von Gummischicht und Scheiben, insbesondere im nicht montierten Zustand, vermieden wird.

Die Gummischicht ist weiterhin bevorzugt an einer das Gummi-Feststofflager in Axialrichtung durchgreifenden Öffnung an der Innenmantelfläche ebenfalls angeordnet. Ferner überdeckt die Gummischicht den mindestens einen nach außen orientiert abstehenden Kragen insbesondere an einer Außenmantelfläche. Bei einem Montagevorgang kann somit an der Außenmantelfläche des Kragens und/oder an der Innenmantelfläche der Öffnung eine Klemmung entweder des Lagers in einer Montageöffnung und/oder eines Schraubbolzens in der Öffnung erfolgen, so dass der Montagevorgang wiederum vereinfacht wird.

Mit dem insbesondere umgebördelten Kragen und/oder einstückig und werkstoffeinheitlich an einer Kunststoffscheibe ausgebildeten Kragen wird es ermöglicht, dass ein zusätzliches Formschlusselement zwischen Gummischeibenanordnung und Radlager bzw. einer Aufnahme des Gummilagers hergestellt ist. Gerade bei Ausführung der elastokinematischen Bewegung an der eingangs erwähnten Achsanordnung, insbesondere Verbundlenkerachse, wird eine axiale und radiale Fixierung des Lagers durch den Kragen sichergestellt. Ein Verrutschen des Lagers aufgrund dauerhafter Wechselbeanspruchungen wird somit vermieden. Der sichere und korrekte Lagersitz wird auch über die Einsatzdauer des Kraftfahrzeuges sichergestellt, weshalb die Lebensdauer des Gummi-Feststofflagers deutlich erhöht ist.

Insbesondere ist es weiterhin vorstellbar, dass der Gummimantel mit der Gummischicht bzw. den Gummischichten einstückig und werkstoffeinheitlich ausgebildet ist. Beispielsweise können die Scheiben eingegossen werden, so dass sich die Gummischicht zwischen den Scheiben ausbildet sowie der Gummimantel das gesamte Feststofflager umfassend und/oder die Öffnung durchsetzend ausgebildet wird. Auch ist jedoch vorstellbar, dass die Gummischicht und der Gummimantel in zwei voneinander verschiedenen Vorgängen aufgebracht werden und/oder aus zwei verschiedenen Gummiwerkstoffen ausgebildet sind. Der Gummimantel bietet weiterhin den Vorteil, dass das Lager an seinem Montageort mittels des Gummimantels verklebt bzw. vulkanisiert wird. Somit wird weiterhin der korrekte Sitz des Lagers sichergestellt.

Das erfindungsgemäße Gummi-Feststofflager wird besonders an einer nachfolgend beschriebenen Kraftfahrzeugachse eingesetzt. Die Kraftfahrzeugachse ist insbesondere eine Verbundlenkerachse, welche aus einem Torsionsprofil mit daran angebundenen Längsschwingen ausgebildet ist, wobei an den freien Enden der Längsschwingen jeweils eine Radaufhängung über mindestens eine elastische Lagerung gekoppelt ist, so dass die Radaufhängung um eine virtuelle Lenkachse schwenkbar gekoppelt ist. Erfindungsgemäß ist die Kraftfahrzeugachse dadurch gekennzeichnet, dass die Radaufhängung über ein Schwenklager mit mindestens einem Rotationsfreiheitsgrad und über zwei Gummi-Feststofflager mit der Längsschwinge gekoppelt ist, wobei sich der Rotationsfreiheitsgrad um die virtuelle Lenkachse dreht und die zwei Gummi-Feststofflager derart angeordnet sind, dass sie einen Federschwerpunkt bilden, der auf das Kraftfahrzeugkoordinatensystem bezogen außerhalb des Kraftfahrzeuges liegt. Der Federschwerpunkt sowie das Schwenklager spannen die Lenkachse auf.

Das Schwenklager weist im Rahmen der Erfindung ausschließlich Rotationsfreiheitsgrade auf, zwingend notwendig ist jedoch nur der Rotationsfreiheitsgrad um die Lenkachse selber. Zur Umsetzung dieser Funktion wären beispielsweise ein Gelenklager, ein Kugelgelenk, ein Gummilager oder aber ein anderes Lager mit mindestens einem Rotationsfreiheitsgrad denkbar. Hierdurch wird ein realer Drehpunkt festgelegt, um die die Radaufhängung sowie ein daran gekoppeltes Rad durch Einstellung von Spur und/oder Sturz schwenkbar sind.

Vorzugsweise verfügen die Gummi-Feststofflager dazu jeweils über eine Längsachse, wobei die Verlängerung der Längsachse den zuvor bereits genannten Federschwerpunkt näherungsweise bildet. Zwischen dem Schwenklager und dem Federschwerpunkt wird somit die Lenkachse aufgespannt, welche wiederum besonders bevorzugt den Radmittelpunkt schneidet. Hierdurch ergibt sich die Möglichkeit, eine passiv betätigte virtuelle Lenkachse an einer Kraftfahrzeugachse, insbesondere an einer Verbundlenkerhinterachse, zu realisieren. Die erfindungsgemäße Anordnung ist besonders geprägt durch ihren einfachen Aufbau, eine günstige Produzierbarkeit sowie eine besondere Wartungsfreiheit während des Betriebes. Die erfindungsgemäße Kraftfahrzeugachse zeichnet sich weiterhin besonders dadurch aus, dass bei erhöhter Zuladung, beispielsweise des Kofferraumes oder aber beim Durchfahren von Bodenwellen, also beim parallelen Einfedern beider an der Achse angeordneten Räder, keine relative Spurkorrektur zwischen Radaufhängung und Längsschwinge erfolgt.

Erfindungsgemäß wird das eigentliche Einfeder- bzw. Ausfederverhalten, also die Aufhängungskinematik der Verbundlenkerachse beibehalten. Eine Spurkorrektur, insbesondere die relative Spurkorrektur zwischen der Radaufhängung und der Längsschwinge, welche durch die erfindungsgemäße Koppelung der Radaufhängung an der Längsschwinge möglich ist, wird dabei nahezu ausschließlich durch Bremskrafteinwirkung, d. h. durch Krafteinwirkung Fx in Kraftfahrzeug X-Richtung erfolgt oder aber durch Seitenkrafteinwirkung Fy, beispielsweise bei Kurvenfahrten.

Bei der Bremskrafteinwirkung erfolgt eine Vorspurkorrektur, wobei ein Standardbremsmanöver bei Geradeausfahrt eine Vorspurkorrektur an beiden Kraftfahrzeugrädern einer Achse hervorruft. Bei Kurvenfahrt erfolgt wiederum bei dem kurvenäußeren Rad eine Vorspurkorrektur und bei dem kurveninneren Rad gegebenenfalls eine Nachspurkorrektur. Diese Spurkorrekturen erfolgen maßgeblich aufgrund der relativen Verlagerung zwischen Radaufhängung und Längsschwinge. Übergreifend wird die jeweilige Koppelungskinematik der Verbundlenkerachse bei dem jeweiligen Manöver mit ausgeführt.

In einer weiteren bevorzugten Ausführungsvariante der vorliegenden Erfindung ist auf das Kraftfahrzeugkoordinatensystem bezogen, das Schwenklager oberhalb der Gummi-Feststofflager angeordnet, vorzugsweise oberhalb des Radmittelpunktes. Hierdurch wird ein Verlauf der virtuellen Lenkachse derart sichergestellt, der in Kraftfahrzeug Z-Richtung und Y-Richtung analog einem negativen Sturz orientiert ist und in Kraftfahrzeug Z- und X-Richtung vorzugsweise einen negativen Nachlauf aufweist. Vorzugsweise ist die virtuelle Lenkachse weiterhin derart positioniert, dass eine negative Nachlaufstrecke an dem jeweiligen Rad vorhanden ist. Ebenfalls ist es erfindungsgemäß von Vorteil, wenn die virtuelle Lenkachse derart positioniert ist, dass ein negativer Lenkrollradius an dem jeweiligen Rad vorhanden ist.

Bevorzugt ist das Schwenklager als Kugelgelenk ausgebildet. Ein Kugelgelenk weist drei Rotationsfreiheitsgrade auf, wobei maßgeblich oder aber ausschließlich der Rotationsfreiheitsgrad um die virtuelle Lenkachse genutzt wird. Für die unteren Gummi-Feststofflager werden Lagerungen mit hierauf bezogen hoher axialer Steifigkeit und relativ dazu geringer radialer Steifigkeit verwendet. Aufgrund eines betriebsbedingten Verschleißes der Gummi-Feststofflager über die Dauer des Betriebes des Kraftfahrzeuges bietet ein Kugelgelenk jedoch zusätzlich zwei weitere Drehfreiheitsgrade, so dass hier Toleranzen bzw. Schwingungen kompensiert werden können, ohne dass ein Ausschlagen oder ähnliches gegenüber einem Lager mit nur einem Drehfreiheitsgrad vermieden wird. In der Folge ist das System verschleißarm und in der Regel wartungsfrei innerhalb eines Kraftfahrzeuglebens.

Vorzugsweise wird ein Verhältnis von Radialsteifigkeit zu Axialsteifigkeit derart gewählt, dass es zwischen einem Bereich von 1 : 30 bis 1 : 100, bevorzugt 1 : 30 bis 1 : 55 liegt. Hierbei ist eine geringe Radialsteifigkeit mit einer dreißig bis fünfzigfach so hohen Axialsteifigkeit im Verhältnis zu sehen. Insbesondere kann das Steifigkeitsverhältnis auch im Bereich zwischen 1 :35 bis 1 :45 oder aber insbesondere im Verhältnis von Radialsteifigkeit zu Axialsteifigkeit 1 : 40 ausgebildet sein. Bevorzugt beträgt die Axialsteifigkeit 30 bis 34 kN/mm, insbesondere 32 kN/mm und die Radialsteifigkeit 400 N/mm bis 800 N/mm, insbesondere 600 N/mm. Dies bedeutet, dass die Axialsteifigkeit 30 bis 100 mal höher ist als die Radialsteifigkeit.

Die axiale Steifigkeit nimmt dabei erfindungsgemäß insbesondere bei erhöhter Krafteinwirkung progressiv zu. Die radiale Steifigkeit verläuft hierzu mit nur geringer Zunahme nahezu linear. Insbesondere wenn die Gummi-Feststofflager vorgespannt eingebaut sind, lässt sich somit das Radial- zu Axialsteifigkeitsverhältnis erhöhen. Hierdurch wird sichergestellt, dass die zwei Gummi-Feststofflager als elastisches System einen Federschwerpunkt bilden, wobei über eine geringe Verdrehsteifigkeit des Ersatzsystems der Federschwerpunkt als Drehpunkt des elastischen Systems aufgefasst werden kann. Die Position des Federschwerpunktes hängt dabei von der Orientierung der elastischen Komponenten ab, sowie dem Radial- zu Axialsteifigkeitsverhältnis der elastischen Komponenten.

Vorzugsweise sind die zwei Gummi-Feststofflager auf das Kraftfahrzeugkoordinatensystem bezogen unterhalb des Schwenklagers angeordnet, besonders bevorzugt unterhalb der Radmitte. Der Bezug unterhalb der Radmitte bedeutet wiederum auf das Kraftfahrzeugkoordinatensystem bezogen nicht, dass es vertikal, also in Z-Richtung direkt unterhalb der Radmitte liegt, sondern kann auch vertikal unter und horizontal versetzt hierzu angeordnet sein. Das in Hauptfahrtrichtung hintere Gummi-Feststofflager ist weiterhin bevorzugt mit seiner Längsachse im Wesentlichen parallel zur Raddrehachse orientiert.

Weiterhin bevorzugt ist das in Fahrtrichtung vorne liegende Gummi-Feststofflager mit seiner Längsachse in einem Winkel α zu der Raddrehachse angeordnet, welcher vorzugsweise in einem Bereich von 10° bis 40°, insbesondere 20° bis 35° und bevorzugt 30° liegt.

In einer weiteren besonders bevorzugten Ausführungsvariante wird jeweils zwischen dem Schwenklager, dem vorderen Gummi-Feststofflager und dem Federschwerpunkt oder aber zwischen dem Schwenklager, dem hinteren Gummi-Feststofflager und dem Federschwerpunkt eine Ebene aufgespannt. Die radiale Richtung des jeweiligen Gummi-Feststofflagers liegt dabei normal zu der jeweils aufgespannten Ebene.

In einer weiteren bevorzugten Ausführungsvariante der vorliegenden Erfindung ist die Radaufhängung ein einschaliges Blechbauteil. Unter der Radaufhängung ist im Rahmen der Erfindung ein Aufhängungsbauteil zu verstehen, welches an die Längsschwinge über die erfindungsgemäße Koppelung angebunden ist. Die Radaufhängung selber kann wiederum einen Radträger aufnehmen oder aber direkt ein Radlager mit entsprechender Radnabe zur Anbindung eines Rades aufweisen. Vorzugsweise ist das Blechbauteil ein Umformbauteil, insbesondere als Warmumform- und Presshärtbauteil ausgebildet. Es kann jedoch auch ein Schmiedeteil oder aber ein Gussbauteil sein. Die Radaufhängung selbst weist wiederum besonders bevorzugt einen Flanschbereich auf, der beispielsweise durch spanende Nachbearbeitung entsprechend präzise hergestellt werden kann. Beispielsweise sind die Gummi-Feststofflager aus zwei Gummimetallscheibenanordnungen ausgebildet, wobei die Gummimetallscheibenanordnungen jeweils an einer Seite der Radaufhängung angeordnet sind und zusammen mit dieser von einem Schraubbolzen formschlüssig durchgriffen sind. Durch entsprechende Anordnung der Gummimetallscheiben im Verbund ist es möglich, eine hohe axiale Steifigkeit gegenüber einer geringen radialen Steifigkeit, welche optimal für das erfindungsgemäße Betriebsverhalten der Spurkorrektur notwendig sind, einzustellen. Im Rahmen der Erfindung sollten die Gummi-Feststofflager mit Schorrhärten zwischen 30 und 75 ausgebildet sein. Die Axialsteifigkeit ist in Relation zur Radialsteifigkeit bevorzugt 40 mal größer zu wählen.

In einer weiteren bevorzugten Ausführungsvariante ist eine Gummimetallscheibenanordnung aus drei Metallscheiben aufgebaut, wobei zwischen die Metallscheiben jeweils eine Gummischicht eingebracht ist. Die Gummischicht kann hier beispielsweise aufvulkanisiert sein oder es können auch Gummischeiben im Verbund mit den Metallscheiben angeordnet sein. Diese können vorzugsweise auch untereinander verklebt sein.

In einer weiteren bevorzugten Ausführungsvariante sind die Gummi-Feststofflageranordnungen vorgespannt, wobei die Gummischicht zumindest bereichsweise gegenüber den Metallscheiben vorstehend ausgebildet ist. Hierdurch lassen sich insbesondere hohe axiale Steifigkeiten bei geringer radialer Steifigkeit einstellen.

In einer weiteren bevorzugten Ausführungsvariante ist an die Radaufhängung ein Radträger anschraubbar, wobei der Radträger vorzugsweise relativ gegenüber der Radaufhängung justierbar ist. Hierbei ist es möglich, Produktionstoleranzen der Verbundlenkerachse, der Radaufhängung oder aber der Aufhängung durch eine Voreinstellung von Spur und Sturz des Radträgers gegenüber der Radaufhängung einzustellen. Während des Betriebsverhaltens selbst sind die Radaufhängung und der Radträger als schubstarre Einheit ausgebildet. In einer weiteren bevorzugten Ausführungsvariante ist die Radaufhängung gegenüber der Längsschwinge justierbar, vorzugsweise über einen exzentrischen Versatz des Kugelgelenks. Hierbei ist es möglich, eine Spur- und/oder Sturzkorrektur über die elastisch gelagerte Radaufhängung vorzunehmen. Hierüber können weiterhin die sich im Betriebsverhalten einstellende Spurkorrektur in ihrer Intensität, bezogen auf den Einfeder- bzw. Ausfederweg, derart eingestellt werden, dass sich keine relativen Spurkorrekturwerte einstellen, sondern diese sich nahezu ausschließlich aus der Federungskinematik der Verbundlenkerachse ergibt.

Beispielsweise ist es somit möglich, eine Hinterachskonstruktion, im Nutzfahrzeugbau, zu verwenden, bei der durch verschiedene Aufbauten des Nutzfahrzeuges Massenunterschiede des Leergewichtes des Kraftfahrzeuges von bis zu 1000 kg auftreten können. Entsprechend muss für jede Aufbauvariante individuell eine Spurkorrekturanstimmung vorgenommen werden. Weitere Vorteile, Merkmale, Eigenschaften und Aspekte der vorliegenden Erfindung sind Bestandteil der folgenden Beschreibung. Eine bevorzugte Ausführungsform wird in den schematischen Figuren dargestellt. Diese dient dem einfachen Verständnis der Erfindung. Es zeigen:
- Figur 1: eine erfindungsgemäße Kraftfahrzeugachse mit radaufhängiger perspektivischen Ansicht;
- Figur 2: die aus einem nicht beanspruchten Beispiel Kraftfahrzeugachse in einer Draufsicht;
- Figur 3: die Kraftfahrzeugachse in einer Seitenansicht;
- Figur 4: die Kraftfahrzeugachse in einer Stirnansicht;
- Figur 5: eine aus einem nicht beanspruchten Beispiel Schnittansicht durch eine erfindungsgemäße Befestigung eines Gummi-Feststofflagers gemäß Schnittansicht A-A aus Figur 2;
- Figur 6: eine Gummi-Feststofflageranordnung;
- Figur 7: eine aus einem nicht beanspruchten Beispiel Metalllageranordnung mit Vorspannung;
- Figur 8a - c: verschiedene Fahreinflüsse auf das Rad und
- Figur 9: eine Federkennlinie der Gummi-Feststofflageranordnung.

In den Figuren werden für gleiche oder ähnliche Bauteile dieselben Bezugszeichen verwendet, auch wenn eine wiederholte Beschreibung aus Vereinfachungsgründen entfällt.

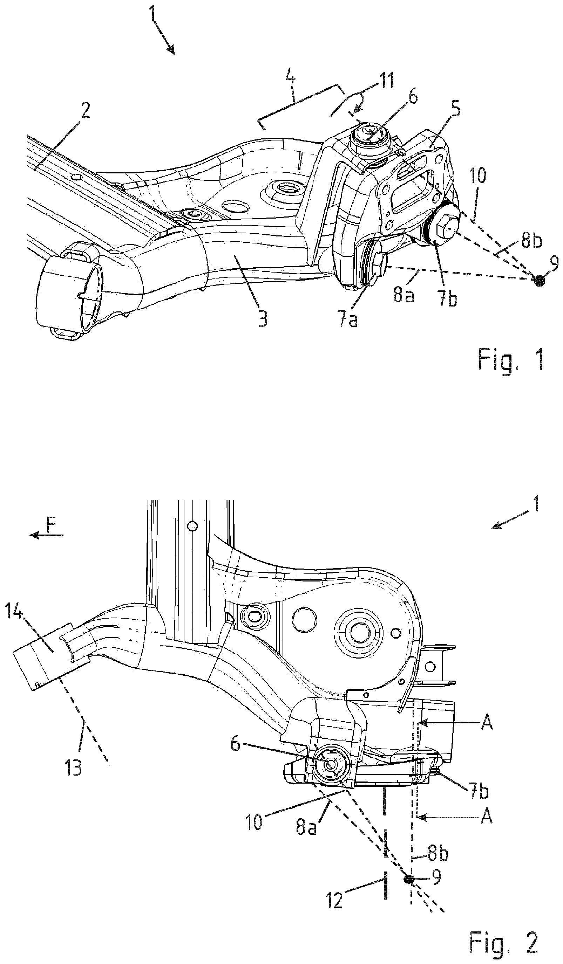

Figur 1 zeigt eine erfindungsgemäße Kraftfahrzeugachse 1, die aus einem Torsionsprofil 2 mit daran gekoppelter Längsschwinge 3 ausgebildet ist. Am Ende 4 des Torsionsprofils 2 ist eine Radaufhängung 5 erfindungsgemäß elastisch über ein Schwenklager 6 sowie zwei Gummi-Feststofflager 7 gekoppelt. Die Gummi-Feststofflager 7a, 7b weisen jeweils eine Längsachse 8a, 8b auf, die sich in einem Federschwerpunkt 9 auf ein Kraftfahrzeugkoordinatensystem bezogen außerhalb des Kraftfahrzeuges schneiden. Der Schnittpunkt 9 sowie das Schwenklager 6 bilden eine virtuelle Lenkachse 10, um die sich ein hier nicht näher dargestelltes Rad schwenkt. Das Schwenklager 6 selber weist dabei einen Rotationsfreiheitsgrad 11 auf, wobei sich der Rotationsfreiheitsgrad 11 um die virtuelle Lenkachse 10 dreht.

Figur 2 zeigt die erfindungsgemäße Kraftfahrzeugachse 1 in einer Draufsicht. Hierbei ist zu erkennen, dass das auf die Fahrtrichtung F bezogene hintere Gummi-Feststofflager 7b eine Längsachse 8b aufweist, die parallel zu einer hier skizziert eingezeichneten Raddrehachse 12 orientiert verläuft. Die Längsachse 13 des vorderen Gummi-Feststofflager 7a weist hierzu einen Winkel α zur Raddrehachse auf. Der Winkel α liegt dabei zur Raddrehachse nach Maßgabe in der XY-Ebene des Kraftfahrzeugkoordinatensystems. Ebenfalls in Figur 2 zu erkennen ist, dass von dem Schwenklager 6 aus, die virtuelle Lenkachse 10 durch den Federschwerpunkt 9 verläuft.

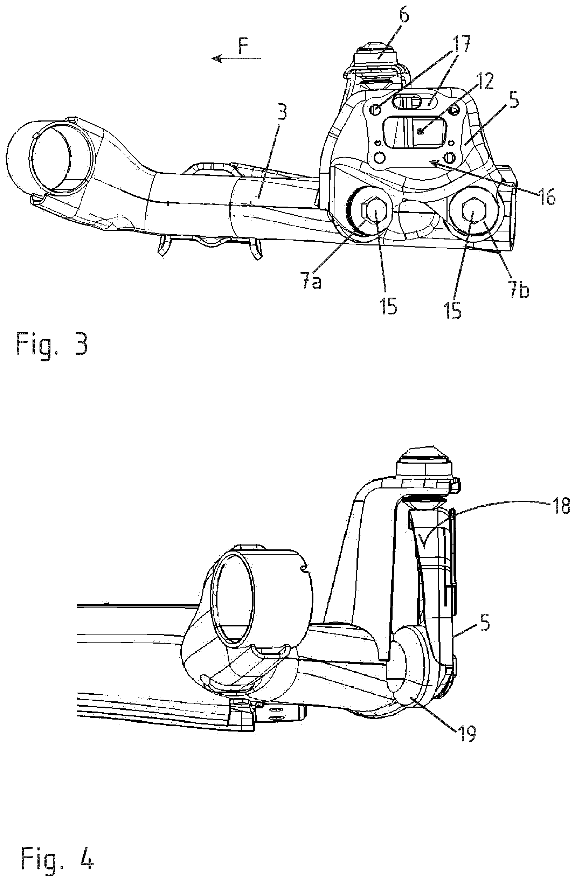

Figur 3 zeigt eine Seitenansicht, in der insbesondere die Radaufhängung 5 kenntlich wird. Das Schwenklager 6 ist oberhalb der in Figur 3 angedeuteten Raddrehachse 12 angeordnet, wohingegen das Gummi-Feststofflager 7a in Fahrtrichtung F vor der Raddrehachse 12 und das Gummi-Feststofflager 7b in Fahrtrichtung F hinter der Raddrehachse 12 angeordnet ist. Die Gummi-Feststofflager 7a, 7b sind jeweils über Schraubbolzen 15 mit der Längsschwinge 3 gekoppelt. Die Radaufhängung 5 weist weiterhin einen Flanschbereich 16 auf, an dem ein hier nicht näher dargestellter Radträger koppelbar ist. Der Flanschbereich 16 weist dazu verschiedene Montageöffnungen 17 auf, so dass der nicht näher dargestellte Radträger justierbar ist.

Figur 4 zeigt eine Frontansicht der erfindungsgemäß elastisch gelagerten Radaufhängung 5, wobei zu erkennen ist, dass diese von einer umlaufenden Verstärkungskante 18 sowohl in ihrer Biegesteifigkeit als auch in ihrer Torsionssteifigkeit verstärkt ist. An den Enden der Längsschwinge 3 sind weiterhin Aufnahmen 19 vorgesehen, an die die hier nicht näher erkennbaren Gummi-Feststofflager gekoppelt werden. Die Aufnahmen 19 erstrecken sich dabei trichterförmig, so dass eine möglichst große hier nicht näher dargestellte Anlagefläche zwischen Aufnahme 19 und Gummi-Feststofflager 7 hergestellt wird.

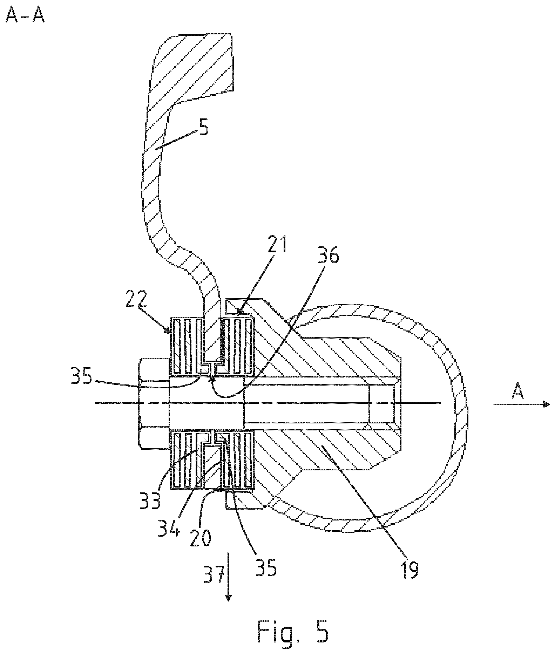

Figur 5 zeigt weiterhin eine Schnittansicht gemäß der Schnittlinie a-a aus Figur 2. Hier ist zu erkennen, dass die Aufnahme 19 einen trichterförmigen Verlauf aufweist und eine Aufnahmenut 20 zur Aufnahme eines innenliegenden Gummi-Feststofflagers 21 sowie eines inneren Gummi-Feststofflagers 21 aufweist. Weiterhin ist eines äußere Gummi-Feststofflager 22 dargestellt, wobei zwischen die zwei Gummi-Feststofflager 21, 22 die Radaufnahme gekoppelt angeordnet ist. Beides wird von der Bolzenschraube durchgriffen, so dass eine formschlüssige Koppelung an die Längsschwinge 3 erfolgt, jedoch über die Gummi-Feststofflagerung eine Elastizität zum Schwenken der Radaufhängung verbleibt. Sowohl das Gummi-Feststofflager 21 als auch das Gummi-Feststofflager 22 weisen jeweils einen in Axialrichtung A orientierten auf das jeweilige Feststofflager bezogenen außen liegenden Scheibe 33 bzw. 34 einen Kragen 35 auf. Die Kragen 35 und die beiden außen liegenden Scheiben 33, 34 sind aufeinander zu orientiert gezeigt und greifen mit dem Kragen 35 abschnittsweise in eine Montageöffnung 36 der Radaufhängung 5. Hierdurch wird sichergestellt, dass insbesondere in Radialrichtung 37 ein formschlüssiger Sitz des Gummi-Feststofflagers 21, 22 erreicht ist und das Gummi-Feststofflager 21, 22 somit im Betrieb bei Ausführung der elastokinematischen Bewegung nicht verrutschen kann.

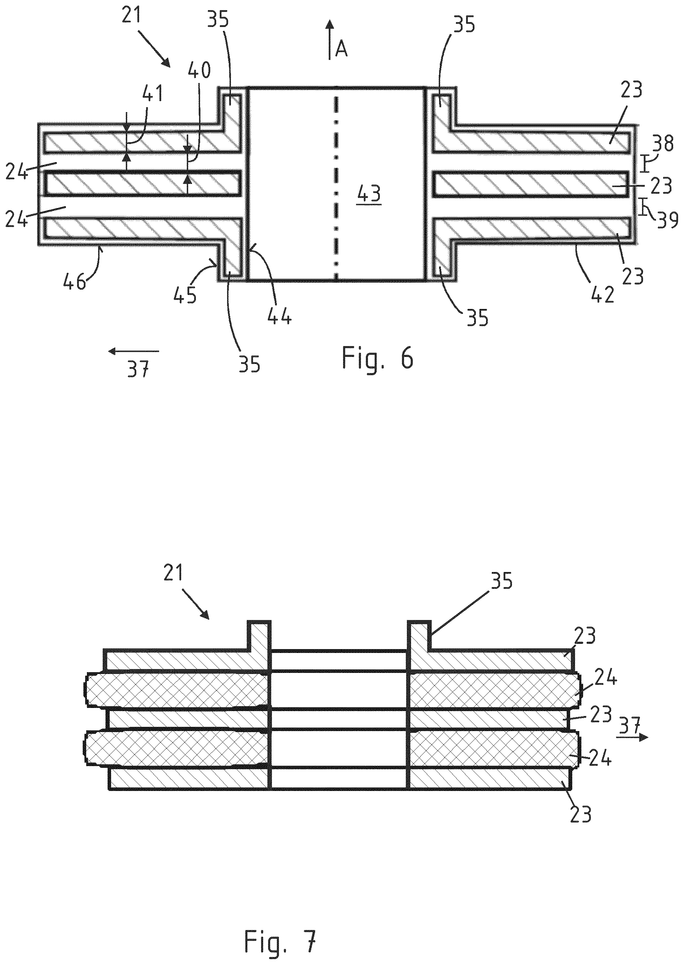

Figur 6 zeigt ein erfindungsgemäßes Gummi-Feststofflager 21 mit drei parallel zueinander beabstandeten Scheiben 23. Die Scheiben 23 können einen Abstand 38, 39 zueinander haben, wobei die Abstände 38, 39 gleich sein können, jedoch auch voneinander verschieden sein können. Zwischen den Scheiben 23 ist dann jeweils die Gummischicht 24 angeordnet, wobei die Gummischicht 24 in Axialrichtung A eine Breite 40 aufweist, die dem jeweiligen Abstand 38, 39 entspricht. Die Scheiben 23 weisen jeweils eine Breite 41 auf, wobei alle Scheiben 23 eine gleiche Breite 41 haben können oder auch voneinander verschiedene Breiten 41 haben können. Die Breite 40 ist bevorzugt größer der Breite 41. Die Breite 40 kann jedoch auch die gleiche Größe gegenüber der Breite 41 haben oder größer sein als die Breite 41. Die Scheiben 23 selbst können dann aus metallischem Werkstoff, insbesondere Stahlwerkstoff ausgebildet sein, jedoch auch aus Kunststoffwerkstoff. Die jeweils außen liegenden Scheiben 23 dieses dargestellten Gummi-Feststofflagers 21 weisen jeweils einen Kragen 35 auf. Beide Kragen 35 sind in entgegengesetzte Axialrichtung A orientiert zeigend ausgestellt. Das gesamte Gummi-Feststofflager 21 ist von einem Gummimantel 42 überzogen. Optional ergänzend ist eine das Lager durchgreifende Öffnung 43 ebenfalls an ihrer Innenmantelfläche 44 von dem Gummimantel 42 überdeckt. Insbesondere die Außenmantelfläche 45 des Kragens 35 ist ebenfalls von dem Gummimantel 42 überdeckt. Somit ist es möglich, dass beispielsweise eine außen liegende Schicht 46 des Gummimantels 42 und/oder der Gummimantel 42 an der Außenmantelfläche 45 des Kragens 35 in der Montageöffnung 36 an der Radaufhängung 5 vulkanisiert sind.

Figur 7 zeigt eine Ausgestaltungsvariante von Figur 6, wobei hier die jeweilige Gummischicht 24 vorgespannt ist, so dass diese über die Scheiben 23 in Radialrichtung 37 überstehend ausgebildet ist. Figur 7 hat nur an der auf die Bildebene bezogenen oberen Scheibe 23 einen Kragen 35 und keinen Gummimantel 42.

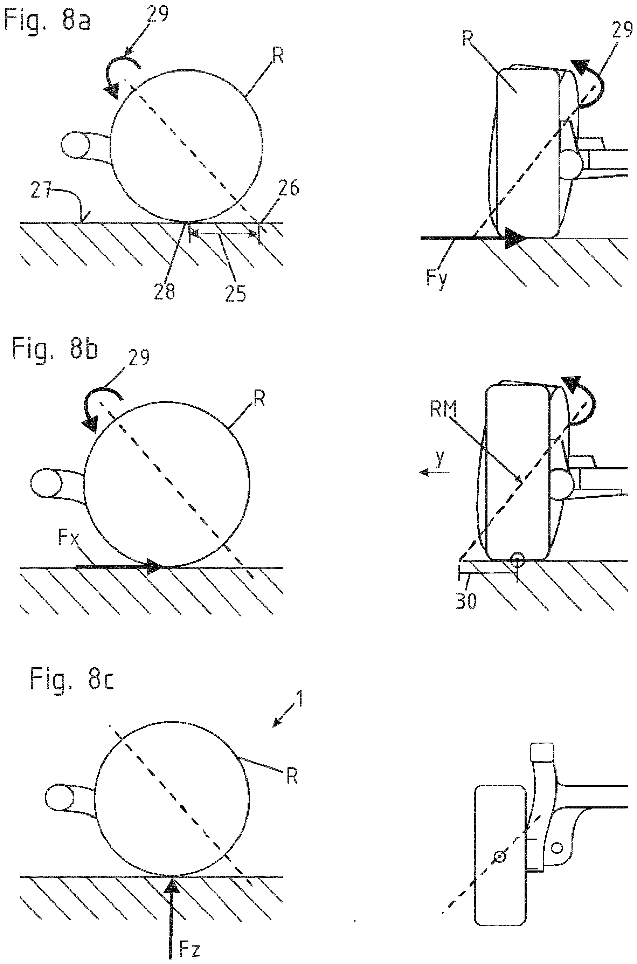

Figur 8 zeigen drei verschiedene Krafteinwirkungen auf das Rad R mit einer erfindungsgemäßen Kraftfahrzeugachse 1. In Figur 8a wird eine Kurvenfahrt exemplarisch dargestellt, wobei eine negative Nachlaufstrecke 25 zwischen dem Schnittpunkt 9 der virtuellen Längsachse 13 und der Fahrbahnoberfläche sowie der Radaufstandsfläche ausgebildet ist. In Folge einer Seitenkrafteinwirkung erfolgt eine Drehung des Rades R um die virtuelle Längsachse 13 in Vorspur.

Figur 8b zeigt die erfindungsgemäße Kraftfahrzeugachse 1 unter der Einwirkung einer Bremskraft Fx. Hierbei wirkt eine Bremskraft Fx auf das Rad R, wobei durch einen negativen Lenkrollradius 30, ausgebildet zwischen dem Radaufstandspunkt 28 sowie dem Schnittpunkt der virtuellen Lenkachse in Kraftfahrzeug Y-Richtung Y eine Drehung um die Lenkachse, sodass das Rad R eine Vorspurkorrektur erfährt.

Figur 8c zeigt die Einwirkung einer Vertikalkraft Fz auf das Rad R einer erfindungsgemäßen Kraftfahrzeugachse 1. Hierbei erfährt das Rad R keine relative Verschiebung um die virtuelle Lenkachse.

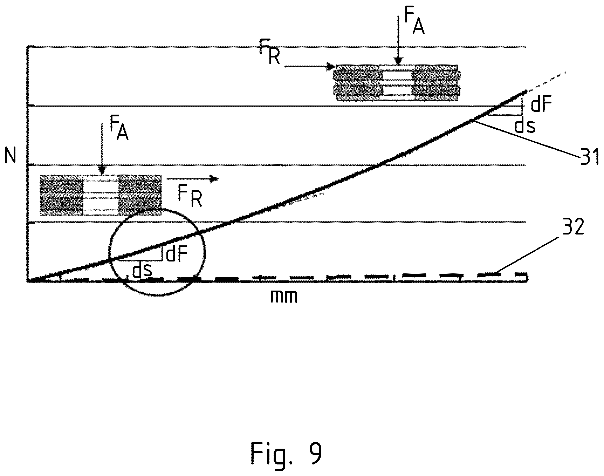

Figur 9 zeigt eine Federkennlinie der Gummi-Feststofflageranordnung, wobei die durchgezogene Linie den Verlauf der Axialsteifigkeit 31 zeigt und die gestrichelte Linie den Verlauf der Radialsteifigkeit 32. Bei erhöhter Axialkrafteinwirkung Fa erfolgt eine progressive Zunahme der Axialsteifigkeit 31, wohingegen nur eine linear verlaufende, minimale Zunahme der Radialsteifigkeit 32 erfolgt. Hierüber lässt sich das Verhältnis von Radial- zu Axialsteifigkeit 31, 32 durch die Vorspannung der Gummi-Feststofflageranordnung im eingebauten Zustand an der Achse beeinflussen.

### Bezugszeichen:

- 1 -: Kraftfahrzeugachse
- 2 -: Torsionsprofil
- 3 -: Längsschwinge
- 4 -: Ende zu 2
- 5 -: Radaufhängung
- 6 -: Schwenklager
- 7a -: vorderes Gummi-Feststofflager
- 7b -: hinteres Gummi-Feststofflager
- 8a -: Längsachse zu 7a
- 8b -: Längsachse zu 7b
- 9 -: Federschwerpunkt
- 10 -: virtuelle Lenkachse
- 11 -: Rotationsfreiheitsgrad
- 12 -: Raddrehachse
- 13 -: Längsachse
- 14 -: Aufhängungslager
- 15 -: Schraubbolzen
- 16 -: Flanschbereich
- 17 -: Montageöffnung
- 18 -: umlaufende Verstärkungskante
- 19 -: Aufnahme
- 20 -: Aufnahmenut
- 21 -: Gummi-Feststofflager
- 22 -: Gummi-Feststofflager
- 23 -: Scheibe
- 24 -: Gummischicht
- 25 -: negative Nachlaufstrecke
- 26 -: Schnittpunkt
- 27 -: Fahrbahnoberfläche
- 28 -: Radaufstandspunkt
- 29 -: Drehung in Vorsprung
- 30 -: negativer Lenkrollradius
- 31 -: Axialsteifigkeit
- 32 -: Radialsteifigkeit
- 33 -: Scheibe
- 34 -: Scheibe
- 35 -: Kragen
- 36 -: Montageöffnung
- 37 -: Radialrichtung
- 38 -: Abstand
- 39 -: Abstand
- 40 -: Breite zu 24
- 41 -: Breite zu 23
- 42 -: Gummimantel
- 43 -: Öffnung
- 44 -: Innenmantelfläche
- 45 -: Außenmantelfläche
- 46 -: Schicht

- A -: Axialrichtung
- R -: Rad
- RM -: Radmittelpunkt
- Fx -: Bremskraft
- Fy -: Seiten kraft
- Fz -: Vertikalkraft
- Fa -: Axial kraft
- Fr -: Radialkraft
- Y -: Kraftfahrzeug Y-Richtung
- F -: Fahrtrichtung
- α -: Winkel

## Patentansprüche

1. Kraftfahrzeugachse (1) mit Gummi-Feststofflager (21, 22), wobei das Gummi-Feststofflager (21, 22) scheibenartig aus mindestens zwei Scheiben (23) aus Feststoff mit dazwischen angeordneter Gummischicht (24) aufgebaut ist, wobei eine auf die Axialrichtung (A) des Gummi-Feststofflagers (21, 22) bezogen außen angeordnete Scheibe (23) einen nach außen stehend orientierten Kragen (35) aufweist und das Gummi-Feststofflager (1) eine dieses in Axialrichtung (A) durchsetzende Öffnung (43) aufweist, **dadurch gekennzeichnet, dass** drei Scheiben (23, 33, 34) parallel zueinander beabstandet angeordnet sind, wobei zwischen den Scheiben (23, 33, 34) jeweils eine Gummischicht (24) angeordnet ist und die beiden auf die Axialrichtung (A) bezogen außen liegenden Scheiben (23, 33, 34) jeweils einen nach außen orientiert abstehenden Kragen (35) aufweisen.

2. Kraftfahrzeugachse (1) mit Gummi-Feststofflager (21, 22) nach dem vorhergehenden Anspruch, **dadurch gekennzeichnet, dass** die Abstände (38, 39) aller drei Scheiben (23, 33, 34) gleich sind oder dass die Abstände (38, 39) zwischen je zwei Scheiben (23, 33, 34) voneinander verschieden sind.

3. Kraftfahrzeugachse (1) mit Gummi-Feststofflager (21, 22) nach einem der Ansprüche 1 oder 2, **dadurch gekennzeichnet, dass** der Feststoff metallischer Werkstoff, insbesondere Stahlwerkstoff, ist, oder dass der Feststoff ein Kunststoffwerkstoff ist.

4. Kraftfahrzeugachse (1) mit Gummi-Feststofflager (21, 22) nach einem der Ansprüche 1 bis 3, **dadurch gekennzeichnet, dass** die Scheiben (23, 33, 34) mit der Gummischicht (24) verklebt sind oder dass die Gummischicht (24) auf die Scheiben (23, 33, 34) aufvulkanisiert ist.

5. Kraftfahrzeugachse (1) mit Gummi-Feststofflager nach einem der Ansprüche 1 bis 4, **dadurch gekennzeichnet, dass** die Scheiben (23, 33, 34) außenseitig vollständig von einem Gummimantel (42) eingeschlossen sind.

6. Kraftfahrzeugachse (1) mit Gummi-Feststofflager (21, 22) nach Anspruch 5, **dadurch gekennzeichnet, dass** der Gummimantel (42) einstückig und werkstoffeinheitlich mit der Gummischicht (24) ausgebildet ist oder dass der Gummimantel (42) separat aufgebracht ist.

7. Kraftfahrzeugachse (1) mit Gummi-Feststofflager nach einem der Ansprüche 5 bis 6 **dadurch gekennzeichnet, dass** die Öffnung (43) an ihrer Innenmantelfläche (44) ebenfalls mit dem Gummimantel (42) versehen ist.

8. Kraftfahrzeugachse (1) mit Gummi-Feststofflager (21, 22) nach einem der vorhergehenden Ansprüche, **dadurch gekennzeichnet, dass** das Verhältnis von Radialsteifigkeit zu Axialsteifigkeit im Intervall von 1 : 30 bis 1 : 100 liegt.

## Claims

1. Motor-vehicle axle (1) with solid rubber bearing (21, 22), wherein the solid rubber bearing (21, 22) is constructed in a disc-type manner from at least two discs (23) made of solid material with a rubber layer (24) arranged in between them, wherein a disc (23) arranged on the outside in relation to the axial direction (A) of the solid rubber bearing (21, 22) has a collar (35) which is oriented so as to stand upright toward the outside and the solid rubber bearing (1) has an opening (43) penetrating this in axial direction (A), **characterised in that** three discs (23, 33, 34) are arranged parallel to each other but apart from each other, wherein rubber layers (24) are arranged respectively between the discs (23, 33, 34) and each of the two discs (23, 33, 34) lying on the outside in relation to the axial direction (A) has a collar (35) which is oriented so as to protrude toward the outside.

2. Motor-vehicle axle (1) with solid rubber bearing (21, 22) according to the preceding claim, **characterised in that** the spacings (38, 39) of all three discs (23, 33, 34) are equal or that the spacings (38, 39) between any two discs (23, 33, 34) are different from each other.

3. Motor-vehicle axle (1) with solid rubber bearing (21, 22) according to one of claims 1 or 2, **characterised in that** the solid material is metal material, more particularly steel material, or that the solid material is a plastic material.

4. Motor-vehicle axle (1) with solid rubber bearing (21, 22) according to any one of claims 1 to 3, **characterised in that** the discs (23, 33, 34) are bonded with the rubber layer (24) or that the rubber layer (24) is vulcanised onto the discs (23, 33, 34).

5. Motor-vehicle axle (1) with solid rubber bearing according to any one of claims 1 to 4, **characterised in that** the discs (23, 33, 34) are completely enclosed on the outside by a rubber jacket (42).

6. Motor-vehicle axle (1) with solid rubber bearing (21, 22) according to claim 5, **characterised in that** the rubber jacket (42) is configured as one piece with the rubber layer (24) and of the same material or that the rubber jacket (42) is attached separately.

7. Motor-vehicle axle (1) with solid rubber bearing according to any one of claims 5 to 6 **characterised in that** the opening (43) is also equipped with the rubber jacket (42) on its internal lateral surface (44).

8. Motor-vehicle axle (1) with solid rubber bearing (21, 22) according to any one of the preceding claims, **characterised in that** the ratio of radial stiffness to axial stiffness lies in the interval from 1 : 30 to 1 : 100.

## Revendications

1. Essieu de véhicule automobile (1) avec un palier rigide en caoutchouc (21, 22), dans lequel le palier rigide en caoutchouc (21, 22) est élaboré à la manière d'un disque à partir d'au moins deux disques (23) composés d'un matériau rigide avec une couche de caoutchouc (24) intercalée, dans lequel un disque (23) disposé à l'extérieur par rapport au sens axial (A) du palier rigide en caoutchouc (21, 22) présente un collet (35) orienté à la verticale vers l'extérieur et le palier rigide en caoutchouc (1) présente une ouverture (43) traversant ce dernier dans le sens axial (A), **caractérisé en ce que** trois disques (23, 33, 34) sont disposés à distance de manière parallèle les uns par rapport aux autres, dans lequel respectivement une couche de caoutchouc (24) est disposée entre les disques (23, 33, 34) et les deux disques (23, 33, 34) situés à l'extérieur par rapport au sens axial (A) présentent respectivement un collet (35) faisant saillie de manière orientée vers l'extérieur.

2. Essieu de véhicule automobile (1) avec un palier rigide en caoutchouc (21, 22) selon la revendication précédente, **caractérisé en ce que** les espacements (38, 39) de l'ensemble des trois disques (23, 33, 34) sont identiques, ou que les espacements (38, 39) entre respectivement deux disques (23, 33, 34) sont différents les uns des autres.

3. Essieu de véhicule automobile (1) avec un palier rigide en caoutchouc (21, 22) selon l'une quelconque des revendications 1 et 2, **caractérisé en ce que** le matériau rigide est un matériau métallique, en particulier un matériau en acier, ou que le matériau rigide est un matériau en matière plastique.

4. Essieu de véhicule automobile (1) avec un palier rigide en caoutchouc (21, 22) selon l'une quelconque des revendications 1 à 3, **caractérisé en ce que** les disques (23, 33, 34) sont collés à la couche de caoutchouc (24), ou que la couche de caoutchouc (24) est appliquée par vulcanisation sur les disques (23, 33, 34).

5. Essieu de véhicule automobile (1) avec un palier solide en caoutchouc selon l'une quelconque des revendications 1 à 4, **caractérisé en ce que** les disques (23, 33, 34) sont totalement enfermés côté extérieur par une enveloppe en caoutchouc (42).

6. Essieu de véhicule automobile (1) avec un palier solide en caoutchouc (21, 22) selon la revendication 5, **caractérisé en ce que** l'enveloppe en caoutchouc (42) est réalisée d'un seul tenant et de manière homogène en termes de matériau avec la couche de caoutchouc (24), ou que l'enveloppe en caoutchouc (42) est appliquée séparément.

7. Essieu de véhicule automobile (1) avec un palier rigide en caoutchouc selon l'une quelconque des revendications 5 et 6,
**caractérisé en ce que** l'ouverture (43) est pourvue au niveau de sa surface enveloppante intérieure (44) également de l'enveloppe en caoutchouc (42).

8. Essieu de véhicule automobile (1) avec un palier solide en caoutchouc (21, 22) selon l'une quelconque des revendications précédentes, **caractérisé en ce que** le rapport entre la rigidité radiale et la rigidité axiale se situe dans la plage allant de 1:30 à 1:100.
